# EUROPÄISCHE PATENTANMELDUNG

(11) **EP 4 675 971 A2**
(43) Veröffentlichungstag der Anmeldung: **07.01.2026**
(21) Anmeldenummer: 25217035.2
(22) Anmeldetag: 26.05.2021
(51) Int. Cl.: H04L 9/32

(54) **COMPUTERIMPLEMENTIERTES VERFAHREN ZUR SPEICHERUNG VON DATEN MITTELS EINER VERTEILTEN TRANSAKTIONSDATENBANK, COMPUTERPROGRAMMPRODUKT UND NETZWERK**

(30) Priorität: 29.05.2020 EP 20177465
(62) Teilanmeldung aus: 21731695.9
(71) Anmelder: Siemens Aktiengesellschaft, 80333 München (DE)
(72) Erfinder: Aigner, Tobias, 85748 Garching (DE); Sauer, Markus, 85748 Garching (DE); Singh, Saurabh Narayan, 85748 Garching (DE); Zupan, Nejc, 81739 München (DE)
(74) Vertreter: Siemens Patent Attorneys

(57) **Zusammenfassung**

Computerimplementiertes Verfahren zur Speicherung von Daten mittels einer verteilten Transaktionsdatenbank, Computerprogrammprodukt und Netzwerk

Bei dem computer-implementiertes Verfahren zur Speicherung von Daten in einem Netzwerk vernetzter Recheneinheiten (10, 20, 30, 40, 50, 60) mittels einer verteilten Transaktionsdatenbank (GDB) wird eine verteilte Transaktionsdatenbank (GDB) in Gestalt einer verteilten und mit Knoten gebildeten Graphendatenbank herangezogen und es werden die Daten in zumindest einen Knoten (N) der Graphendatenbank gespeichert, wobei der Knoten (N) mittels einer echten Teilmenge der Recheneinheiten (10, 20, 30, 40, 50, 60) des Netzwerks gespeichert ist.

Das Computerprogramm-Produkt ist direkt in einen Speicher einer elektronischen Recheneinheit (10, 20, 30, 40, 50, 60) ladbar und weist Programm-Mittel auf, um die Schritte des Verfahrens auszuführen, wenn das Programm in einer Recheneinheiten ausgeführt wird

Das Netzwerk vernetzter Recheneinheiten (10, 20, 30, 40, 50, 60) speichert eine verteilte Transaktionsdatenbank (GDB) in Gestalt einer verteilten Graphendatenbank, umfassend Knoten (N), in welchen Daten nach einem solchen Verfahren gespeichert werden.

## Beschreibung

Die Erfindung betrifft ein computerimplementiertes Verfahren zur Speicherung von Daten in einem Netzwerk vernetzter Recheneinheiten mittels einer verteilten Transaktionsdatenbank und ein Computerprogramm sowie ein Netzwerk vernetzter Recheneinheiten, welches eine Transaktionsdatenbank speichert.

Es ist bekannt, Daten in verteilten Transaktionsdatenbanken zu speichern. Beispielsweise kommen solche Transaktionsdatenbanken in IoT-Umgebungen zum Einsatz, insbesondere bei Fertigungsstraßen oder Kraftwerken, in welchen Feldgeräte Daten mittels verteilter Transaktionsdatenbanken miteinander austauschen. Solche Transaktionsdatenbanken sind regelmäßig mit Netzwerken vernetzter Recheneinheiten, etwa Feldgeräten, realisiert und in dem Netzwerk gespeichert. Zudem können beispielsweise mittels verteilter Transaktionsdatenbanken Lieferdaten von Lieferketten ausgehandelt und gespeichert werden.

Bei verteilten Transaktionsdatenbanken werden in diesen gespeicherte Daten in jeder einzelnen Recheneinheit des Netzwerks als Kopie vorgehalten. Daher sind verteilte Transaktionsdatenbanken nur schlecht skalierbar, da der Speicheraufwand mit zunehmender Größe der verteilten Transaktionsdatenbank sowie mit zunehmender Anzahl der Recheneinheiten des Netzwerks deutlich wächst.

Der deutlich wachsende Speicherbedarf wird durch eine als *"Sharding"* bekannte Maßnahme adressiert, welche die Daten der verteilten Transaktionsdatenbank in Teile aufteilt und die Teile mittels verschiedener Recheneinheiten des Netzwerkes speichert. Diese Aufteilung der Daten der Transaktionsdatenbank erfolgt typischerweise zentralisiert. Allerdings erhöht eine solche zentralisierte Aufteilung von Daten die Fehleranfälligkeit eines solchen Netzwerkes, sodass in der Regel eher dezentrale Ansätze bevorzugt werden.

Dezentrale verteilte Transaktionsdatenbanken halten allerdings sämtliche Daten der Transaktionsdatenbank als Kopie an jeder einzelnen Recheneinheit des Netzwerkes vor. Da gerade dezentral verteilte Transaktionsdatenbanken beispielsweise in Kombination mit kryptographischen Verfahren als besonders manipulationssicher und ausfallsicher gelten, besteht ein Spannungsverhältnis zwischen der Skalierbarkeit einer verteilten Transaktionsdatenbank einerseits und der Manipulations- und Ausfallsicherheit einer solchen Transaktionsdatenbank andererseits.

Ein weiteres Problem verteilter Transaktionsdatenbanken besteht darin, dass eine Vertraulichkeit von in der Transaktionsdatenbank gespeicherten Daten kaum gewährleistet werden kann. Bislang müssen solche vertraulichen Daten außerhalb der Transaktionsdatenbank gespeichert werden. Das widerspricht konzeptionell dem Grundgedanken einer verteilten Transaktionsdatenbank.

Weitere Nachteile bestehen im erhöhten Kommunikationsaufwand bei bekannten verteilten Transaktionsdatenbanken ab einer bestimmten Größe der Transaktionsdatenbank und/oder des Netzwerks. Die Administration und Koordination bei der Speicherung und beim Zugriff auf in der Transaktionsdatenbank gespeicherte Daten gerät dabei sehr leicht sehr hoch.

Es ist daher die Aufgabe der Erfindung, ein verbessertes Verfahren zur Speicherung von Daten in einem Netzwerk vernetzter Recheneinheiten mittels einer verteilten Transaktionsdatenbank anzugeben. Insbesondere soll das Verfahren auch im Falle einer zunehmenden Größe der Transaktionsdatenbank und/oder im Falle einer Zunahme der Anzahl von Recheneinheiten leichter durchgeführt werden können als bisher bekannte Verfahren zur Speicherung von Daten mittels verteilter Transaktionsdatenbanken. Bevorzugt soll das Verfahren zudem eine vertrauliche Speicherung von Daten erlauben.

Ferner ist es eine Aufgabe der Erfindung, ein verbessertes Computerprogramm anzugeben, mittels welchem ein solches Verfahren ausgeführt werden kann. Zudem ist es Aufgabe der Erfindung, ein verbessertes Netzwerk vernetzter Recheneinheiten anzugeben, mittels welchem ein solches Verfahren ausgeführt werden kann.

Diese Aufgabe der Erfindung wird mit einem computerimplementierten Verfahren zur Speicherung von Daten in einem Netzwerk vernetzter Recheneinheiten mittels einer verteilten Transaktionsdatenbank mit den in Anspruch 1 angegebenen Merkmalen sowie mit einem Computerprogramm mit den in Anspruch 10 angegebenen Merkmalen und mit einem Netzwerk vernetzter Recheneinheiten mit den in Anspruch 11 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Verfahren ist ein computerimplementiertes Verfahren zur Speicherung von Daten in einem Netzwerk vernetzter Recheneinheiten mittels einer verteilten Transaktionsdatenbank. Bei dem erfindungsgemäßen Verfahren wird eine verteilte Transaktionsdatenbank in Gestalt einer verteilten und mit Knoten gebildeten Graphendatenbank herangezogen und es werden die Daten in zumindest einem Knoten der Graphendatenbank gespeichert. Bei dem erfindungsgemäßen Verfahren ist der Knoten mittels einer echten Teilmenge der Recheneinheiten des Netzwerkes gespeichert.

Unter einer echten Teilmenge der Recheneinheiten des Netzwerkes ist eine Menge zu verstehen, welche nicht sämtliche Recheneinheiten des Netzwerkes umfasst, d.h. in der echten Teilmenge ist mindestens eine Recheneinheit des Netzwerkes vernetzter Recheneinheiten nicht enthalten.

Unter einem Speichern mittels einer Recheneinheit ist ein Speichern in einem Speicher der Recheneinheit und/oder in einem der Recheneinheit zugeordnetem Speicher zu verstehen. Vorzugsweise führt dabei die Recheneinheit Speicheranweisungen zur Speicherung in diesem Speicher aus. Zweckmäßig ist dabei der Speicher ein Arbeitsspeicher und/oder ein Datenträger, insbesondere eine Festplatte und/oder ein der Recheneinheit zugeordneter und/oder mit der Recheneinheit verknüpfter und/oder verbundener Cloudspeicher.

Mittels des erfindungsgemäßen Verfahrens müssen folglich nicht sämtliche Daten der verteilten Transaktionsdatenbank mittels sämtlicher Recheneinheiten des Netzwerkes gespeichert werden. Vielmehr können einzelne Knoten der Graphendatenbank mittels derjenigen Recheneinheiten gespeichert werden, die eine echte Teilmenge der Recheneinheiten des Netzwerkes ausmachen. Auf diese Weise können Vertraulichkeitsanforderungen sehr leicht eingehalten werden, indem Knoten der Graphendatenbank nur auf solchen Recheneinheiten gespeichert werden, welchen der Zugriff auf die Daten des Knotens gestattet sein soll.

Im Gegensatz dazu werden die Daten der Transaktionsdatenbank beim bekannten *"Sharding"* zufällig aufgeteilt, d.h. eine knotenweise Aufteilung von Daten der Transaktionsdatenbank ist mittels bekannter Verfahren nicht möglich. Besonders bevorzugt lassen sich die in den Knoten der erfindungsgemäß herangezogenen verteilten Graphendatenbank gespeicherten Daten einem oder mehreren bestimmten Anwendungsfällen zuordnen. Auf diese Weise kann mittels des erfindungsgemäßen Verfahrens eine anwendungsfallweise Aufteilung von Daten über bestimmte ausgewählte Recheneinheiten des Netzwerkes erfolgen. Insbesondere können Vertraulichkeitsstufen bestimmten Anwendungsfällen pauschal zugeordnet werden, sodass auch bestimmte Berechtigungen von Recheneinheiten zum Zugriff auf diese Daten knotenweise und folglich auch anwendungsfallweise eingerichtet werden können.

Ein weiterer Vorteil des erfindungsgemäßen Verfahrens besteht darin, dass sich das erfindungsgemäße Verfahren leicht skalieren lässt. Da bei dem erfindungsgemäßen Verfahren Daten lediglich mittels Recheneinheiten einer echten Teilmenge gespeichert werden müssen, lassen sich grundsätzlich beliebig große Transaktionsdatenbanken mit beliebig vielen Recheneinheiten realisieren. Der tatsächliche Speicherbedarf hängt bei dem erfindungsgemäßen Verfahren weniger von der Anzahl der Recheneinheiten des gesamten Netzwerks, sondern vielmehr von der Anzahl der Recheneinheiten der jeweiligen Teilmenge ab, welche nicht oder nicht notwendigerweise mit der Größe des Netzwerkes mitwächst.

Auch der Kommunikationsaufwand zur Administration steigt nicht notwendigerweise mit der Größe der Transaktionsdatenbank sowie mit der Anzahl an Recheneinheiten an, da sich auch der Kommunikationsaufwand, etwa zur Synchronisation der Daten des Knotens, auf die Recheneinheiten der echten Teilmenge beschränkt. Folglich lassen sich mittels des erfindungsgemäßen Verfahrens Daten in beliebig großen Transaktionsdatenbanken mit beliebig vielen Knoten und in beliebig großen Netzwerken mit beliebig vielen Recheneinheiten effizient speichern.

Es versteht sich, dass eine verteilte Transaktionsdatenbank im Sinne dieser Erfindung eine Datenbank bedeutet, welche im englischen Sprachgebrauch auch als "Distributed Ledger" bezeichnet wird. Es versteht sich ferner, dass eine Graphendatenbank im Sinne dieser Erfindung eine mit Knoten und Kanten gebildete Graphendatenbank bedeutet, bei welcher Daten in Knoten eingetragen sind, welche via Kanten miteinander verbunden sind.

Vorzugsweise bilden die Kanten kryptographische Verbindungen zwischen den Knoten, insbesondere mittels Hash-Werten und/oder mittels Einweg-Funktionen und/oder mittels kryptographischer Schlüssel.

Bei den Recheneinheiten im Sinne dieser Erfindung handelt es sich zweckmäßig um Computer und/oder Server. Grundsätzlich kann eine Recheneinheit im Sinne dieser Erfindung auch als logische Recheneinheit gebildet sein, welche ihrerseits über ein verteiltes Rechnernetzwerk realisiert ist, etwa über ein Cloud-Netzwerk.

In einer bevorzugten Weiterbildung des erfindungsgemäßen Verfahrens sind oder umfassen die Daten Transaktionsdaten von Transaktionen von Recheneinheiten des Netzwerks, d.h. von Transaktionen, an welchen Recheneinheiten des Netzwerkes teilnehmen, und die echte Teilmenge der Recheneinheiten umfasst zumindest oder genau solche Recheneinheiten, welche an den Transaktionen der Transaktionsdaten teilnehmen.

Auf diese Weise werden die in den Knoten gespeicherten Daten mittels derjenigen Recheneinheiten des Netzwerkes gespeichert, welche an den in dem Knoten gespeicherten Transaktionen der Transaktionsdaten teilnehmen. Bevorzugt handelt es sich ausschließlich um solche Recheneinheiten, welche an den Transaktionen der Transaktionsdaten teilnehmen.

Auf diese Weise können die Inhalte der Knoten vorteilhaft nur solchen Recheneinheiten zugänglich gemacht werden, welche ohnehin an den Transaktionen der in den Knoten gespeicherten Transaktionsdaten beteiligt sind. Mit anderen Worten: die in den Knoten gespeicherten Transaktionsdaten sind nur denjenigen Recheneinheiten zugänglich, welche überhaupt einen Bezug zu den Transaktionsdaten haben. Auf diese Weise können Daten in Form von Transaktionsdaten zuverlässig vertraulich gehalten werden und nur mit solchen Recheneinheiten geteilt werden, welche die Kenntnisse der Transaktionsdaten benötigen, um die Transaktionen abschließen zu können.

Mittels dieser Weiterbildung des erfindungsgemäßen Verfahrens ist vorteilhaft also eine Transaktionsdatenbank realisierbar, bei welcher Transaktionsdaten in einer echten Teilmenge der Recheneinheiten vertraulich behandelt werden können. Folglich muss kein Kompromiss zwischen einer öffentlichen Zugänglichkeit der Transaktionsdatenbank und einer Erfüllung eines Vertraulichkeitserfordernisses gewählt werden, sondern beide Ziele können mittels dieser Weiterbildung des erfindungsgemäßen Verfahrens gleichermaßen erreicht werden.

In einer vorteilhaften Weiterbildung ist bei dem erfindungsgemäßen Verfahren der Knoten ein Teil eines Pfads eines mit Knoten gebildeten Graphen der Graphendatenbank. Unter einem Pfad im Sinne dieser Erfindung ist eine durchgängig verknüpfte Kette von Knoten zu verstehen, welche jeweils miteinander, zweckmäßig mittels Kanten, verknüpft sind. Ein solcher Pfad kann einen Zweig oder eine Schleife des Graphen bilden. Bei einem Zweig des Graphen ist es besonders bevorzugt, wenn sämtliche Knoten dieses Zweiges des Graphen mittels der echten Teilmenge der Recheneinheiten gespeichert sind. Geeigneterweise sind die in den Knoten des Zweiges gespeicherten Daten Transaktionsdaten und die echte Teilmenge umfasst die vereinigende Menge der an den Transaktionen der Transaktionsdaten der Knoten des Zweigs beteiligten Recheneinheiten.

Auf diese Weise lassen sich nicht nur die Transaktionsdaten einzelner Knoten vertraulich über die echte Teilmenge der Recheneinheiten verteilen, sondern es können Daten sogar in einem gesamten Pfad gespeichert werden, welche infolge der Speicherung mittels der echten Teilmenge der Recheneinheiten des Netzwerkes unter diesen Recheneinheiten der Teilmenge vertraulich bleibt.

Es können also Zweige, sogenannte Side-Chains, mittels einer echten Teilmenge der Recheneinheiten vertraulich gespeichert werden, sodass nicht notwendigerweise das gesamte Netzwerk von den in dem Zweig gespeicherten Daten Kenntnis erhält. Besonders bevorzugt bildet der Pfad eine Schleife des Graphen aus, d.h. der Pfad zweigt nicht nur von weiteren Teilen des Graphen ab, sondern vereinigt sich wieder mit dem Graphen, sodass sich eine Schleife mit übrigen Teilen des Graphens gewissermaßen schließt. Zweckmäßig bildet der Pfad die Schleife mit übrigen, nicht zum Pfad gehörenden Teilen des Graphen gemeinsam aus, d.h. der Pfad zweigt von übrigen Teilen des Graphen ab und vereinigt sich mit diesen übrigen Teilen wieder. Somit umfasst bevorzugt der Pfad nicht diese übrigen Teile des Graphen, sondern lediglich den abgezweigten und noch nicht wieder vereinigten Teil des Pfades.

So lassen sich Daten des Pfades in der echten Teilmenge der echten Einheiten vertraulich behandeln, jedoch können Ergebnisse, die auf diesen vertraulich behandelten Daten beruhen, wieder in den übrigen Graphen eingehen, welcher für Transaktionsdaten in anderen Teilen des Netzwerkes, etwa bei Recheneinheiten außerhalb der echten Teilmenge, erforderlich sind. Auf diese Weise zerfällt bei dem erfindungsgemäßen Verfahren die Transaktionsdatenbank nicht in einzelne Untertransaktionsdatenbanken, sondern die Transaktionsdatenbank bleibt eine zusammenhängende Datenbank, bei welcher Wechselwirkungen und/oder Datenaustausche zwischen einzelnen Teilmengen der Recheneinheiten des Netzwerkes möglich bleiben.

Vorzugsweise sind bei dem erfindungsgemäßen Verfahren die in den Knoten des Pfads gespeicherten Daten Transaktionsdaten von Transaktionen von Recheneinheiten des Netzwerks, welche, vorzugsweise ausschließlich, einem Anwendungsfall zuordbar sind. Somit können in dieser Weiterbildung Anwendungsfälle mittels jeweils eines separaten Pfades des Graphen der Graphendatenbank gespeichert werden.

In einer bevorzugten Weiterbildung des erfindungsgemäßen Verfahrens werden Daten in Knoten einer solchen Graphendatenbank gespeichert, welche mehrere Pfade aufweist, wobei jeweils der Pfad, d.h. die zu einem jeweiligen Pfad gehörenden Knoten, mittels einer echter Teilmengen von Recheneinheiten des Netzwerkes gespeichert wird und wobei die echten Teilmengen eine von den echten Teilmengen verschiedene Schnittmenge aufweisen. Auf diese Weise sind bei dem erfindungsgemäßen Verfahren Daten in einer Graphendatenbank gespeichert, welche in Teilmengen der Recheneinheiten des Netzwerkes gespeichert sind, welche miteinander nicht identisch sind, d.h. es gibt zumindest Recheneinheiten einer Teilmenge, welche nicht Teil einer anderen Teilmenge ist. Auf diese Weise können Daten mit unterschiedlichen Berechtigungsgruppen in der Transaktionsdatenbank gespeichert werden.

Dabei ist es in einer bevorzugten Weiterbildung der Erfindung möglich, dass die Schnittmenge leer ist, d.h. keine Recheneinheit ist Teil sämtlicher Teilmengen.

In einer weiteren bevorzugten Weiterbildung der Erfindung kann es jedoch auch sein, dass die Schnittmenge nicht leer ist, d.h. es besteht eine Überlappung der Teilmengen, wobei die Überlappung zumindest eine Recheneinheit des Netzwerkes umfasst. Insbesondere können eine oder mehrere solche Recheneinheiten diese nicht leerer Schnittmenge bilden, welche Administrationsaufgaben in dem Netzwerk übernehmen.

Das erfindungsgemäße Computerprogramm ist direkt in einen Speicher einer elektronischen Recheneinheit ladbar, wobei das Computerprogramm Programmmittel aufweist, um die Schritte des zuvor erläuterten erfindungsgemäßen Verfahrens auszuführen, wenn das Programm in einer der Recheneinheiten ausgeführt wird.

Das erfindungsgemäße Netzwerk vernetzter Recheneinheiten speichert eine verteilte Transaktionsdatenbank in Gestalt einer verteilten Graphendatenbank, wobei die Graphendatenbank Knoten umfasst, in welchen Daten nach einem erfindungsgemäßen Verfahren - wie zuvor erläutert - gespeichert werden.

Nachfolgend wird die Erfindung anhand eines in der Zeichnung dargestellten Ausführungsbeispiels näher erläutert.

### Es zeigen:

- Figur 1:: Eine verteilte Transaktionsdatenbank in Gestalt einer verteilten Graphendatenbank schematisch in einer Prinzips-Skizze und
- Figur 2:: Schritte des erfindungsgemäßen Verfahrens schematisch in einer Prinzips-Skizze.

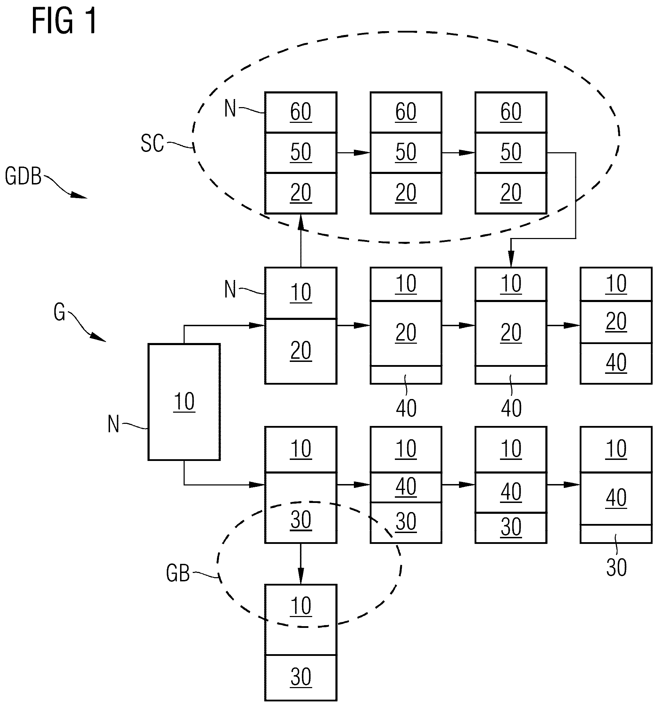

Die in Figur 1 dargestellte verteilte Transaktionsdatenbank ist eine verteilte Graphendatenbank GDB. Die Graphendatenbank GDB bildet einen *Distributed Ledger.* Bei der Graphendatenbank GDB sind Daten in Knoten N eingetragen, welche via Kanten miteinander verbunden sind. Die Kanten stellen kryptographische Verbindungen zwischen den Knoten N dar, im gezeigten Ausführungsbeispiel Hash-Werte. In weiteren, nicht eigens dargestellten Ausführungsbeispielen können sonstige Einweg-Funktionen oder kryptographische Schlüssel zur Verknüpfung der Knoten N herangezogen sein.

Die Graphendatenbank GDB ist mit einem Graphen G gebildet, welcher einzelne Knoten N umfasst. Die Knoten N des Graphen G sind miteinander mittels solcher kryptographischer Verfahren verknüpft, welche einen ConsensusMechanismus, im dargestellten Ausführungsbeispiel einen "Proof of Work" oder einen "Proof of Stake", darstellen. In weiteren, nicht eigens dargestellten Ausführungsbeispielen können auch andere Consensus-Mechanismen eingesetzt werden. Die Verknüpfung ist in Figur 1 mittels Pfeilen dargestellt, welche die Knoten N verbinden. Mittels der Graphendatenbank GDB sollen Daten von Lieferketten gespeichert werden. Dabei bildet der Graph G der Graphendatenbank GDB die interne Struktur der Lieferkette ab, welche anwendungsfallspezifische Zweige aufweist. Je nach Anwendungsfall gibt es für die verschiedenen Zweige unterschiedliche Betroffene des Anwendungsfalls, was sich in unterschiedlichen Recheneinheiten 10, 20 30, 40, 50, 60 des Netzwerks, welches die Graphendatenbank GDB speichert und somit betreibt, widerspiegelt.

Bei den Recheneinheiten 10, 20 30, 40, 50, 60 im Sinne dieser Erfindung handelt es sich um als Server operierende Computer. Grundsätzlich kann in weiteren, nicht eigens dargestellten Ausführungsbeispielen eine Recheneinheit 10, 20 30, 40, 50, 60 auch als logische Recheneinheit gebildet sein, welche ihrerseits über ein verteiltes Rechnernetzwerk realisiert ist, etwa über ein Cloud-Netzwerk.

Unter einem Speichern mittels einer Recheneinheit 10, 20 30, 40, 50, 60 ist ein Speichern in einem Speicher der Recheneinheit 10, 20 30, 40, 50, 60, vorliegend einem Arbeitsspeicher, zu verstehen. In weiteren, nicht eigens dargestellten Ausführungsbeispielen kann auch in einen der Recheneinheit 10, 20 30, 40, 50, 60 zugeordneten Speicher zu verstehen sein. In weiteren, nicht eigens dargestellten Ausführungsbeispielen, welche dem dargestellten Ausführungsbeispiel entsprechen, kann der Speicher auch ein Datenträger wie beispielsweise eine Festplatte oder ein der Recheneinheit zugeordneter und mit der Recheneinheit 10, 20 30, 40, 50, 60 verknüpfter und signalverbundener Cloudspeicher sein.

Eine Wurzel der Graphendatenbank GDB ist in Figur 1 als ein ganz links befindlicher Knoten N dargestellt. Diese Wurzel weist lediglich Initialisierungsdaten und Konfigurationsdaten des Netzwerkes sowie Administrationsdaten zur weiteren Administration des Netzwerkes 10, 20 30, 40, 50, 60 auf. Folglich sind in diesen Knoten N gespeicherte Daten über eine kleine Teilmenge von Recheneinheiten 10 des Netzwerkes 10, 20 30, 40, 50, 60 gespeichert. Dabei sind die Daten des Knotens N redundant mittels der Recheneinheiten 10 der Teilmenge gespeichert. Der Graph G verzweigt sich von diesen Knoten N fortschreitend in zwei Zweige, welche unterschiedliche Use-Case-Anwendungen abbilden.

Ein erster Anwendungsfall betrifft die Teilmenge der Recheneinheiten 10 sowie eine weitere Teilmenge der Recheneinheiten 20, welcher in dem in Figur 1 dargestellten Ausführungsbeispiel den oben abzweigenden Anwendungsfall bildet.

Ein zweiter Anwendungsfall betrifft die Recheneinheiten 10, 30. Folglich werden die Knoten N im ersten Anwendungsfall mittels der Recheneinheiten 10, 20 redundant gespeichert, im zweiten Anwendungsfall mittels der Recheneinheiten 10, 30.

In beiden Anwendungsfällen werden im weiteren Verlauf auch die Recheneinheiten einer Teilmenge 40 betroffen, welche, wie in Figur 10 dargestellt, nach rechts fortschreitend Transaktionsdaten in die Knoten N einspeichern und Kopien der Knoten N buchhalten.

In Figur 1 ganz oben gezeigt zweigt eine private Side-Chain SC vom Graphen G ab. Die Knoten N der privaten Side-Chain SC enthalten nur Daten der Recheneinheiten 20, 50, 60, während die dort gespeicherten Daten die Recheneinheiten 10 nicht weiter betreffen. Folglich sind Daten der Recheneinheiten 10 in den Knoten N der privaten Side-Chain nicht gespeichert. Vielmehr werden die Knoten N der privaten Side-Chain SC lediglich mittels der Recheneinheiten 20, 50, 60 gespeichert.

Nachdem der Anwendungsfall für die private Side-Chain SC abgeschlossen ist, wird die private Side-Chain SC wieder mit dem übrigen Graphen G vereinigt.

Ganz unten dargestellt ist ein Beispiel für einen Zweig, in welchem ein Zweig GB nach unten abzweigt.

Der Zweig GB betrifft zwar ebenfalls Transaktionen der Recheneinheiten 10, 30, sodass sich die Teilmenge der Recheneinheiten 10, 30, welche der Zweig GB betrifft, nicht von derjenigen Teilmenge der Recheneinheiten 10, 30 unterscheidet, von welchen der Zweig GB abzweigt. Jedoch bildet der Zweig GB einen neuen Anwendungsfall, welcher mittels des Zweigs GB folglich auch in der Struktur des Graphen G als eigenständiger Zweig GB repräsentiert wird.

Im dargestellten Ausführungsbeispiel bilden die Recheneinheiten 10 Konsortial-Recheneinheiten 10, welche sämtliche Knoten N des Graphen G mit Ausnahme der Knoten N der privaten Side-Chain SC speichern.

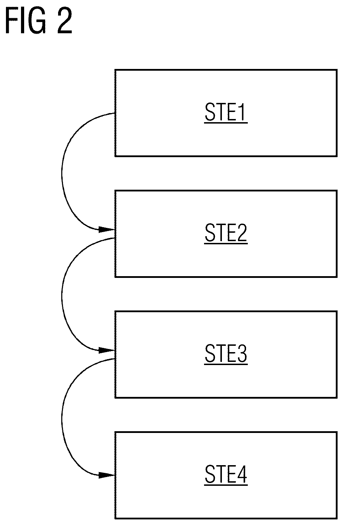

Mittels des erfindungsgemäßen Verfahrens werden Daten in die Knoten N des Graphen G der verteilten Graphendatenbank GDB gespeichert. Das Verfahren zur Speicherung der Daten in die Knoten N erfolgt dabei anhand des Zweiges GB der Fig. 1 wie in Figur 2 dargestellt:
Wenn ein neuer Knoten N des Graphen G zur Verfügung steht, werden zunächst diejenigen Recheneinheiten 10, 30 identifiziert, welche in einem bestimmten Anwendungsfall mitwirken. Diese Teilmenge der Recheneinheiten 10, 30 stellen demzufolge auch Daten in den Knoten N des Anwendungsfalls ein. Die Identifikation dieser Teilmenge der Recheneinheiten 10, 30 erfolgt im Schritt STE1.

Diese Recheneinheiten 10, 30 der Teilmenge stellen ihrerseits ihre Recheneinheiten 10, 30 zur Verfügung, um den Knoten N des Graphen G zu speichern. Eine Liste dieser Recheneinheiten 10, 30, beispielsweise in Form von Mac-Adressen oder IP-Adressen, wird an alle Recheneinheiten 10, 30 der Teilmenge übermittelt. Jede Recheneinheit 10, 30 nimmt folglich eine Liste der für diesen Anwendungsfall zur Verfügung stehenden Recheneinheiten 10, 30 entgegen in einem Schritt STE2.

Nachfolgend erschaffen diese Recheneinheiten 10, 30 einen Zweig GB von Knoten N, welcher für diesen Anwendungsfall spezifisch ist. Jede Recheneinrichtung 10, 30, welche Daten in diese Knoten N einstellt, übermittelt sämtlichen Recheneinrichtungen 10, 30 der Teilmenge die Daten, die sie einstellt, in einem Schritt STE3.

Zugleich wird von jeder Recheneinrichtung 10, 30 ein Satz von Kopien von Daten aller anderen Recheneinrichtungen 10, 30 in einem Schritt STE4 erhalten.

Zusätzlich werden auch Kopien der in den Knoten N des Zweiges GB gespeicherten Daten in den Konsortial-Recheneinrichtungen 10 gespeichert - mit Ausnahme der Daten der Knoten N in privaten Side-Chains SC.

## Patentansprüche

1. Computerimplementiertes Verfahren zur Speicherung von Daten in einem Netzwerk vernetzter Recheneinheiten (10, 20, 30, 40, 50, 60) mittels einer verteilten Transaktionsdatenbank (GDB), bei welchem eine verteilte Transaktionsdatenbank (GDB) in Gestalt einer verteilten und mit Knoten gebildeten Graphendatenbank herangezogen wird und bei welchem die Daten in zumindest einen Knoten (N) der Graphendatenbank gespeichert werden, wobei der Knoten (N) mittels einer echten Teilmenge der Recheneinheiten (10, 20, 30, 40, 50, 60) des Netzwerks gespeichert ist.

2. Verfahren nach dem vorhergehenden Anspruch, bei welchem die Daten Transaktionsdaten von Transaktionen von Recheneinheiten (10, 20, 30, 40, 50, 60) des Netzwerks sind oder umfassen und bei welchem die echte Teilmenge der Recheneinheiten (10, 20, 30, 40, 50, 60) solche Recheneinheiten (10, 20, 30, 40, 50, 60) umfasst, welche an den Transaktionen der Transaktionsdaten teilnehmen.

3. Verfahren nach einem der vorhergehenden Ansprüche, bei welchem der Knoten (N) Teil eines Pfads (SC, GB) eines mit Knoten (N) gebildeten Graphen der Graphendatenbank ist.

4. Verfahren nach einem der vorhergehenden Ansprüche, bei welchem der Pfad (GB) einen Zweig des Graphen bildet.

5. Verfahren nach einem der vorhergehenden Ansprüche, bei welchem der Pfad (SC) eine Schleife des Graphen bildet.

6. Verfahren nach einem der vorhergehenden Ansprüche, bei welchem die in den Knoten (N) des Pfads (SC, GB) gespeicherten Daten Transaktionsdaten von Transaktionen von Recheneinheiten (10, 20, 30, 40, 50, 60) des Netzwerks sind, welche, vorzugsweise ausschließlich, einem Anwendungsfall zuordbar sind.

7. Verfahren nach einem der vorhergehenden Ansprüche, bei welchem die Daten in einen Knoten (N) einer solchen Graphendatenbank gespeichert wird, welche mehrere Pfade aufweist, deren Knoten mittels jeweils echter Teilmengen von Recheneinheiten (10, 20, 30, 40, 50, 60) des Netzwerks gespeichert wird, wobei die echten Teilmengen eine von den echten Teilmengen verschiedene Schnittmenge aufweisen.

8. Verfahren nach dem vorhergehenden Anspruch, bei welchem die Schnittmenge leer ist.

9. Verfahren nach dem vorhergehenden Anspruch, bei welchem die Schnittmenge nicht leer ist.

10. Computerprogramm-Produkt welches direkt in einen Speicher einer elektronischen Recheneinheit (10, 20, 30, 40, 50, 60) ladbar ist, mit Programm-Mitteln, um die Schritte des Verfahrens nach einem der Ansprüche 1 bis 9 auszuführen, wenn das Programm in einer der Recheneinheiten ausgeführt wird.

11. Netzwerk vernetzter Recheneinheiten (10, 20, 30, 40, 50, 60), speichernd eine verteilte Transaktionsdatenbank (GDB) in Gestalt einer verteilten Graphendatenbank, umfassend Knoten (N), in welchen Daten nach einem Verfahren nach einem der Ansprüche 1 bis 9 gespeichert werden.
